(19) **Europäisches Patentamt / European Patent Office / Office européen des brevets**

(11) **EP 4 134 578 A1**

(12) **EUROPEAN PATENT APPLICATION**
published in accordance with Art. 153(4) EPC

(43) Date of publication:
**15.02.2023 Bulletin 2023/07**

(21) Application number: **21785003.1**

(22) Date of filing: **05.04.2021**

(51) International Patent Classification (IPC):
**F16L 9/02** (1968.09)    **C22C 38/00** (1974.07)
**C22C 38/50** (1974.07)    **F02M 55/02** (1968.09)

(52) Cooperative Patent Classification (CPC):
**C22C 38/00; C22C 38/50; F02M 55/02; F16L 9/02;**
**Y02P 10/20**

(86) International application number:
**PCT/JP2021/014435**

(87) International publication number:
**WO 2021/206034 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.04.2020 JP 2020069080**

(71) Applicant: **NIPPON STEEL CORPORATION**
**Chiyoda-ku**
**Tokyo 100-8071 (JP)**

(72) Inventors:
• **MAKINO, Taizo**
  **Tokyo 100-8071 (JP)**
• **YAMAZAKI, Masahiro**
  **Tokyo 100-8071 (JP)**

(74) Representative: **Zimmermann & Partner**
**Patentanwälte mbB**
**Postfach 330 920**
**80069 München (DE)**

(54) **STEEL PIPE FOR PRESSURE PIPING**

(57)    There is provided a steel pipe for pressure piping, the steel pipe being subjected to autofrettage, wherein when an outer diameter of the steel pipe is denoted by D, an inner diameter of the steel pipe is denoted by d, and a yield stress of the steel pipe is denoted by $\sigma_y$, and when a measured value of a residual stress at an outer surface is denoted by $\sigma_{o1}$, a measured value of a residual stress at an outer surface after halving is denoted by $\sigma_{o2}$, and a measured value of a residual stress at an inner surface after the halving is denoted by $\sigma_{i2}$, D/d is 1.2 or more, and an estimated value $\sigma_{i1}$ of a residual stress at an inner surface of the steel pipe determined by $[\sigma_{i1} = (-\sigma_{i2}) / (A\times(t/T)^2 - 1)]$, $[t/T = ((\sigma_{o2}-\sigma_{o1}) / (A\times(\sigma_{o2}-\sigma_{o1}) - C\times\sigma_{i2}))^{1/2}]$, $[A= 3.9829 \times \exp(0.1071\times(D/d)^2)]$, and $[C = -3.3966 \times \exp(0.0452\times(D/d)^2)]$ satisfies $[1.1 \times F \times \sigma_y \leq \sigma_{i1} \leq 0.8 \times F \times \sigma_y]$ ($F = (0.3 \times (3-D/d)^2 - 1)$ when $1.2 \leq D/d \leq 3.0$, and $F = -1$ when $D/d > 3.0$).

FIGURE 3

(After autofrettage)

**Description**

TECHNICAL FIELD

The present invention relates to a steel pipe for pressure piping.

BACKGROUND ART

As countermeasures against energy exhaustion in the future, the movement for promoting energy-saving, the movement for recycling resources, and the development of technologies to achieve these goals have gained momentum. In particular, there have recently been strong demands for the reduction of $CO_2$ emissions with fuel combustion to prevent global warming, as worldwide efforts.

Internal combustion engines with low $CO_2$ emissions include diesel engines used in an automobile or the like. However, although emitting less $CO_2$, a problem with diesel engines is their generation of black smoke. Black smoke is produced due to a lack of oxygen with respect to injected fuel. In other words, part of the fuel is thermally decomposed, which causes dehydrogenation, producing a precursor of black smoke, and the precursor is thermally decomposed again, agglomerated, and combined to form black smoke. The black smoke thus produced brings about air pollution, raising concern of an adverse effect thereof on human bodies.

The emission of black smoke can be reduced by increasing the injection pressure of fuel to combustion chambers of a diesel engine. To this end, however, a steel pipe used for fuel injection is required to have high fatigue strength. For such a fuel injection pipe or a steel pipe for a fuel injection pipe, the following techniques have been disclosed.

Patent Document 1 discloses a method for producing a steel pipe to be used for fuel injection in a diesel engine, in which an inner surface of a seamless steel pipe starting material subjected to hot rolling is ground and abraded by shotblasting, and the starting material is then subjected to cold drawing. Patent Document 1 describes that, by employing this production method, high strengthening of a steel pipe to be used for fuel injection is enabled because depths of flaws on an inner surface of the steel pipe (e.g., unevenness, fracture, fine crack, etc.) are 0.10 mm or less.

Patent Document 2 discloses a steel pipe for a fuel injection pipe in which a maximum diameter of nonmetallic inclusions present at least at up to a depth of 20 $\mu$m from an inner surface of the steel pipe is 20 $\mu$m or less and that has a tensile strength of 500 MPa or more.

Patent Document 3 discloses a steel pipe for a fuel injection pipe having a tensile strength of 900 N/mm$^2$ or more, in which a maximum diameter of nonmetallic inclusions at least present at up to a depth of 20 $\mu$m from an inner surface of the steel pipe is 20 $\mu$m or less.

The invention of Patent Document 3 achieves a tensile strength of 900 MPa or more by producing a blank pipe using a steel material from which A type, B type, and C type coarse inclusions are removed by reducing S, devising a casting method, reducing Ca, and the like, adjusting a diameter of the blank pipe to an intended diameter by cold working, and then performing quenching and tempering. In Examples of Patent Document 3, critical internal pressures of 260 to 285 MPa are achieved.

Patent Document 4 discloses a steel pipe for a fuel injection pipe having a tensile strength of 800 MPa or more, preferably 900 MPa or more and excellent in internal pressure fatigue resistance, and discloses a fuel injection pipe produced from the steel pipe. Patent Document 5 discloses a steel pipe for a fuel injection pipe that exerts a high advantageous effect of improving critical internal pressure even with a relatively low autofrettage pressure and is excellent in workability and internal pressure fatigue resistance.

LIST OF PRIOR ART DOCUMENTS

PATENT DOCUMENT

Patent Document 1: JP9-57329A
Patent Document 2: WO 2007/119734
Patent Document 3: WO 2009/008281
Patent Document 4: WO 2015/129617
Patent Document 5: WO 2016/203924

NON PATENT DOCUMENT

Non-Patent Document 1: Eisuke Nakayama, Mitsuo Miyahara, Kazuo Okamura, Hiroki Fujimoto, and Kiyoyuki Fukui, "Prediction of Fatigue Strength of Spot-Welded Joints Based on Local Material Strength Properties Measured by Small Specimen", J.Soc, Mat. Sci., Japan, Vol. 53, No. 10, pp. 1136-1142, Oct. 2004

Non-Patent Document 2: The Society of Materials Science, Japan, "Standard for X-Ray Stress Measurement (2002) - Iron and Steel -", Mar. 2002

SUMMARY OF INVENTION

TECHNICAL PROBLEM

A steel pipe to be used for fuel injection produced by the method disclosed in Patent Document 1 has high strength but cannot provide a fatigue life appropriate to a strength of a material of the steel pipe. A higher strength of a material of a steel pipe naturally enables a higher pressure to be applied to an inside of the steel pipe. However, in a case where pressure is applied to an inside of a steel pipe, an internal pressure to be a limit up to which no fracture due to fatigue occurs at an inner surface of the steel pipe (hereinafter, referred to as "critical internal pressure") does not depend only on a strength of a material of the steel pipe. In other words, even when the strength of the material of the steel pipe is increased, a critical internal pressure more than expected cannot be provided. With consideration given to a reliability of an end product and the like, the longer the fatigue life is, the more preferable it is, but the lower the critical internal pressure is, the shorter the fatigue life becomes because the steel pipe is prone to be fatigued with use under high internal pressure.

The steel pipes for a fuel injection pipe disclosed in Patent Documents 2 and 3 have the advantages of their long fatigue lives and high reliabilities. However, even the steel pipes disclosed in Patent Documents 2 and 3 do not necessarily have high critical internal pressure commensurate with the tensile strengths of the steel pipes.

Therefore, according to Patent Documents 4 and 5, autofrettage is performed to provide high critical internal pressure. The autofrettage is a process of producing compressive residual stress by applying an excessive internal pressure so as to partially subject a vicinity of an inner surface to plastic deformation. By performing autofrettage, the critical internal pressure can be increased without increasing the tensile strength of the steel pipe.

However, if a pressure applied to an inner surface of a steel pipe is excessive in autofrettage, the risk of bursting increases; therefore, the pressure is generally set to be low from the viewpoint of safety. As a result, even with autofrettage performed, the conventional techniques fail to increase the critical internal pressure sufficiently and are still susceptible to improvement.

An objective of the present invention is to solve the problem and to provide a steel pipe for pressure piping that has high critical internal pressure.

SOLUTION TO PROBLEM

The present invention has been made to solve the problem and has a gist of the following steel pipe for pressure piping.

(1) A steel pipe for pressure piping, the steel pipe being subjected to autofrettage, wherein

when an outer diameter of the steel pipe is denoted by D (mm), an inner diameter of the steel pipe is denoted by d (mm), and a yield stress of the steel pipe is denoted by $\sigma_y$ (MPa), and

when a measured value of a residual stress at an outer surface of the steel pipe after the autofrettage is denoted by $\sigma_{o1}$ (MPa), a measured value of a residual stress at an outer surface of the steel pipe after the autofrettage and halving is denoted by $\sigma_{o2}$ (MPa), and a measured value of a residual stress at an inner surface of the steel pipe after the autofrettage and the halving is denoted by $\sigma_{i2}$ (MPa),

D/d is 1.2 or more, and

an estimated value $\sigma_{i1}$ (MPa) of a residual stress at an inner surface of the steel pipe after the autofrettage satisfies Formula (v) shown below, the estimated value $\sigma_{i1}$ being determined by Formula (i) to Formula (iv) shown below:

$$\sigma_{i1} = (-\sigma_{i2}) / (A \times (t/T)^2 - 1) \qquad (i)$$

$$t/T = ((\sigma_{o2} - \sigma_{o1}) / (A \times (\sigma_{o2} - \sigma_{o1}) - C \times \sigma_{i2}))^{1/2} \qquad (ii)$$

$$A = 3.9829 \times \exp(0.1071 \times (D/d)^2) \qquad \text{(iii)}$$

$$C = -3.3966 \times \exp(0.0452 \times (D/d)^2) \qquad \text{(iv)}$$

$$1.1 \times F \times \sigma_y \leq \sigma_{i1} \leq 0.8 \times F \times \sigma_y \qquad \text{(v)}$$

where F in Formula (v) is a coefficient,

$F = (0.3 \times (3-D/d)^2 - 1)$ when $1.2 \leq D/d \leq 3.0$, and
$F = -1$ when $D/d > 3.0$.

ADVANTAGEOUS EFFECTS OF INVENTION

According to the present invention, steel pipes for pressure piping having a high critical internal pressure can be provided stably.

BRIEF DESCRIPTION OF DRAWINGS

[Figure 1] Figure 1 is a diagram illustrating an example of a steel pipe that has been subjected to autofrettage and is to be estimated for a residual stress with an estimating device.
[Figure 2] Figure 2 is a diagram for describing a method for deriving a multivariable function.
[Figure 3] Figure 3 is a diagram for describing the method for deriving a multivariable function.
[Figure 4] Figure 4 is a diagram for describing the method for deriving a multivariable function.
[Figure 5] Figure 5 is a diagram for describing a shape of an internal pressure fatigue test specimen.

DESCRIPTION OF EMBODIMENTS

Factors in the prior art that cause a failure to sufficiently optimize an autofrettage pressure for increasing a critical internal pressure include an unestablished method for determining a residual stress on an inner surface of a steel pipe. Note that the residual stress herein means residual stress in a circumferential direction of a steel pipe.
In conventional practices, the present inventors have evaluated a residual stress at an inner surface of a steel pipe subjected to autofrettage in a relative manner by cutting the steel pipe in half and measuring a residual stress at an inner surface of the steel pipe after the halving. Note that cutting in half means cutting a steel pipe such that the steel pipe is divided into two equal, arc-shaped members when viewed in its axial direction.
However, to increase critical internal pressure sufficiently by optimizing autofrettage pressure, a residual stress at an inner surface of a steel pipe after autofrettage and before halving needs to be evaluated quantitatively. The present inventors have thus conducted studies about a method for evaluating a residual stress at an inner surface of a steel pipe quantitatively. In the course of the studies, the present inventors investigated the evaluation of a residual stress at an inner surface of a steel pipe after autofrettage and before halving by considering a residual stress at the inner surface of a halved steel pipe as well as a residual stress at an outer surface of the steel pipe before the having and a residual stress at the outer surface of the steel pipe after the halving.
The present inventors first conducted a numerical analysis (FEM analysis) using an analytic model for a steel pipe to be evaluated under various kinds of conditions to determine residual stresses (calculated value) that are set up at portions of the steel pipe by autofrettage. Specifically, the present inventors first conducted the numerical analysis to determine a residual stress $\sigma_{o1}$ at an outer surface of the steel pipe after the autofrettage and before halving, a residual stress $\sigma_{i1}$ at an inner surface of the steel pipe after the autofrettage and before the halving, a residual stress $\sigma_{o2}$ at an outer surface of the steel pipe after the autofrettage and the halving, and a residual stress $\sigma_{i2}$ at an inner surface of the steel pipe after the autofrettage and the halving.
As a result of investigations in depth about the residual stresses obtained in the above manner, the present inventors found that the residual stress $\sigma_{i1}$ at the inner surface of the steel pipe before the halving can be estimated with high accuracy using the residual stress $\sigma_{o1}$ at the outer surface of the steel pipe before the halving, the residual stress $\sigma_{o2}$ at the outer surface of the steel pipe after the halving, and the residual stress $\sigma_{i2}$ at the inner surface of the steel pipe after the halving.

The present inventors then came to obtain a finding that steel pipes having high critical internal pressure can be provided stably by adjusting autofrettage conditions such that an estimated value $\sigma_{i1}$ of the residual stress at the inner surface of the steel pipe before the halving satisfies a predetermined condition.

The present invention is made based on the findings described above. Requirements of the present invention will be described below in detail.

1. Steel Pipe for Pressure Piping

The present invention relates to a steel pipe for pressure piping. The pressure piping includes a hydraulic cylinder, an airbag steel pipe, an accumulator, a pipe for hydrogen, a fuel injection pipe, and the like. To withstand high internal pressure, it is desirable to increase a wall thickness of a steel pipe with an increase in an inner diameter of the steel pipe. With an inner diameter of a steel pipe constant, an outer diameter of the steel pipe is increased as a wall thickness of the steel pipe is increased. In other words, to withstand high internal pressure, it is desirable to increase an outer diameter of a steel pipe with an increase in an inner diameter of the steel pipe. When D (mm) denotes an outer diameter of a steel pipe, and d (mm) denotes an inner diameter of the steel pipe, a steel pipe being a subject matter in the present invention brings D/d to 1.2 or more. D/d is preferably 1.5 or more and is more preferably 2.0 or more.

The other dimensions may be selected according to usage of the steel pipe and need not be limited to particular dimensions. For example, in a case where the steel pipe is used as a hydraulic cylinder, it is generally preferable to select an inner diameter of the steel pipe within the range of 15 to 580 mm in accordance with working pressure (internal pressure) to secure the output (load) of a piston. In addition, it is preferable to select a wall thickness of the steel pipe within the range of 5 to 60 mm and select an outer diameter of the steel pipe within the range of 30 to 700 mm so that the steel pipe is capable of withstanding repetitive internal pressure. The higher an internal pressure fatigue strength, the thinner the wall thickness can be made to be, which determines the outer diameter accordingly.

In a case where the steel pipe is used as an airbag inflator, the outer diameter of the steel pipe is desirably 20 to 100 mm and is more desirably 20 to 60 mm. The wall thickness of the steel pipe is desirably 1 to 5 mm and is more desirably 1 to 4 mm.

In a case where the steel pipe is used as an accumulator, the outer diameter of the steel pipe is desirably 25 to 500 mm and is more desirably 50 to 400 mm. The wall thickness of the steel pipe is desirably 2 to 40 mm and is more desirably 4 to 30 mm.

Further, in a case where the steel pipe is used as a pipe for hydrogen gas or a fuel injection pipe, the steel pipe is required to have a certain amount of volume to reduce fluctuations in inside pressure in its use. For that reason, the inner diameter of the steel pipe is desirably 2.5 mm or more and is more desirably 3.0 mm or more. In addition, because of requirement of withstanding high internal pressure, the wall thickness of the steel pipe is desirably 1.5 mm or more and is more desirably 2.0 mm or more. On the other hand, the outer diameter of the steel pipe is desirably 20 mm or less, is more desirably 15 mm or less, and is still more desirably 10 mm or less.

Mechanical properties of the steel pipe may be selected according to usage of the steel pipe and need not be limited to particular mechanical properties. However, in a case where the steel pipe is used in pressure piping such as one for a fuel injection pipe or a hydraulic cylinder, a tensile strength of the steel pipe is preferably 500 MPa or more, is more preferably 800 MPa or more, and is still more preferably 900 MPa or more. A yield stress of the steel pipe is preferably 300 MPa or more, is more preferably 400 MPa or more, and is still more preferably 500 MPa or more.

A yield ratio of the steel pipe is preferably 0.50 to 0.95; the yield ratio is more preferably 0.60 or more and is still more preferably 0.70 or more to provide a high compressive residual stress by performing autofrettage with higher pressure. To introduce a compressive residual stress more efficiently by performing autofrettage with low pressure, the yield ratio is preferably 0.90 or less and is more preferably 0.85 or less.

In the present invention, the tensile strength of the steel pipe is determined by cutting out a straight pipe section of the steel pipe, chucking regions extending by a certain length from both end faces of the straight pipe section (hereinafter, referred to as "grip portions"), and conducting a tensile test with an extensometer set up on a parallel portion of the straight pipe section between the grip portions. The chucking is performed in such a manner as to press chuck jaws formed with a V groove or an R groove shallower than an external diameter of the steel pipe against the grip portions by means of oil pressure or bolting, or using a wedge jig.

The length of the grip portions is only required to be determined with consideration given to a pressing pressure and a test load so that the steel pipe subjected to the test does not slip during the test. A length of the parallel portion is only required to be ensured to the extent that the extensometer can be set up, and that necking deformation occurring immediately before rupture is not influenced by chucks. If the steel pipe has no straight pipe section with a sufficient length, the tensile test may be conducted with a small test specimen having a thin dumbbell shape as described in Non-Patent Document 1 cut out from the steel pipe.

The steel pipes for pressure piping according to the present invention preferably has a critical internal pressure satisfying Formula (I) shown below.

$$IP \geq 0.44 \times TS \times \alpha \qquad (I)$$

$$\alpha = [(D/d)^2 - 1] / [0.776 \times (D/d)^2] \qquad (II)$$

Note that, in Formula (I) above, IP denotes the critical internal pressure (MPa) of the steel pipe, TS denotes the tensile strength (MPa) of the steel pipe, and $\alpha$ is a value given by Formula (II) above. Further, in Formula (II) above, D denotes an outer diameter (mm) of the steel pipe, and d denotes an inner diameter (mm) of the steel pipe. The value $\alpha$ is a coefficient for compensating for changes in the relation between an internal pressure and an initiation stress at the inner surface of the steel pipe in accordance with the ratio of the outer diameter to the inner diameter of the steel pipe.

The term "critical internal pressure" in the present invention means a highest internal pressure (MPa) that causes no breakage (leak) to occur, in an internal pressure fatigue test in which an internal pressure fluctuation following a sine wave over time is repeatedly applied with a lowest internal pressure set to 18 MPa, even when the number of repetitions of the internal pressure fluctuation reaches $10^7$. Specifically, the critical internal pressure is determined, on an S-N curve with its vertical axis representing maximum internal pressure and its horizontal axis representing the number of repetitions at breakage, as a middle value between a minimum value of maximum internal pressures at which a breakage occurs and a maximum value of maximum internal pressures which cause no breakage to occur even when the number of repetitions reaches $10^7$.

2. Residual Stress Estimation Model

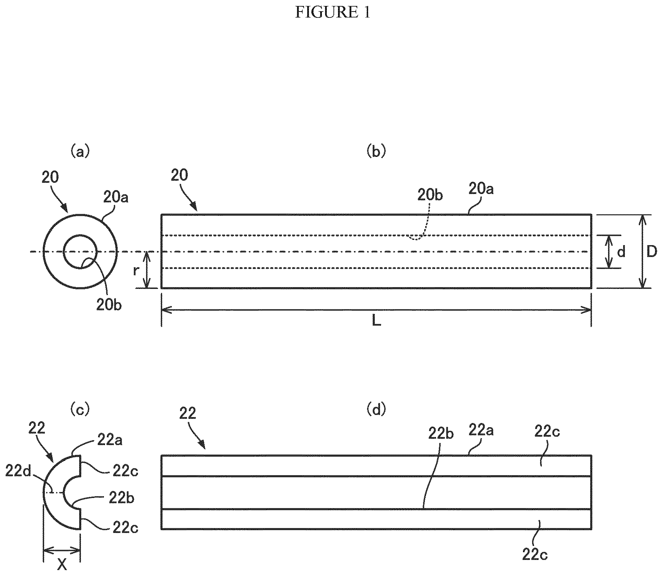

A model for estimating the residual stress $\sigma_{i1}$ at an inner surface of a steel pipe before halving will be described in detail. Figure 1 is a diagram illustrating an example of a steel pipe that has been subjected to autofrettage and is to be estimated for a residual stress with this model. In Figure 1, (a) is a left side view of a steel pipe 20 that has been subjected to autofrettage, (b) is a front view of the steel pipe 20 illustrated in (a), (c) is a left side view of a halved sample 22 provided by cutting the steel pipe 20 illustrated in (a) in half, and (d) is a front view of the halved sample 22 illustrated in (c). Note that a steel pipe after halving herein means a halved sample provided by cutting a steel pipe after autofrettage in half.

In this model, measured values of a residual stress $\sigma_{o1}$ at an outer surface 20a of the steel pipe 20 after the autofrettage, a residual stress $\sigma_{o2}$ at the outer surface 22a of the halved sample 22, and a residual stress $\sigma_{i2}$ at an inner surface 22b of the halved sample 22 are used. Note that, as described above, the residual stresses each mean residual stress in a circumferential direction of the steel pipe 20.

Referring to Figure 1, when the residual stresses are measured, a length L of the steel pipe 20 is preferably made to be three times or more an outer diameter D of the steel pipe 20 and can be made to be, for example, about 30 mm. If heat generation in cutting the steel pipe 20 in half goes to excess, the heat influences a residual stress at its inner surface. Therefore, it is necessary to adopt a cutting method that generates heat as low as possible, and the cutting of the steel pipe 20 in half is preferably performed by wire cut electrical discharge. At this time, in a side view of the halved sample 22, a distance X between a cut surface 22c of the halved sample 22 and a center of the outer surface 22a (a distance in a direction perpendicular to the cut surface 22c) is controlled so as to be within $\pm 5\%$ of a radius r of the steel pipe 20.

Measurement of the residual stresses is conducted after removing outer layers of the outer surface 20a of the steel pipe 20 and the inner surface 22b of the halved sample 22 within the range of 10 $\mu$m or less by electropolishing. As a method for the measurement, a $\sin^2\psi$ method based on an X-ray diffraction technique can be used, and the method can be performed in conformity with Non-Patent Document 2.

An estimated value of the residual stress $\sigma_{i1}$ is calculated from a multivariable function of variables including the residual stresses $\sigma_{o1}$, $\sigma_{o2}$, and $\sigma_{i2}$, actually measured by the method described above as well as the outer diameter D and the inner diameter d.

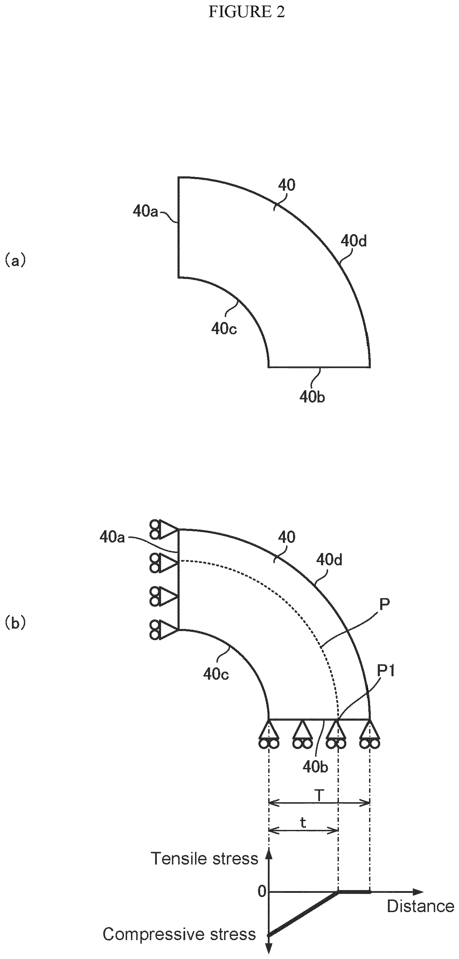

Specifically, as illustrated in Figure 2(a), an analytic model 40 (1/4 model) that is arc-shaped and obtained by modeling a cross section of the steel pipe 20 (a cross section perpendicular to a cylindrical axis direction) using two-dimensional, plane strain elements is generated. Although not illustrated, the analytic model 40 is divided into a plurality of elements (meshes). The analytic model 40 is assumed to have physical properties of an elastic body.

First, to simulate the steel pipe 20, as illustrated in Figure 2(b), constraint conditions are set such that both end portions 40a and 40b of the analytic model 40 in its circumferential direction are constrained from moving in the circumferential direction. Then, as an initial state, a volume force that simulates a state of the steel pipe 20 during the autofrettage. Specifically, in the initial state, a compressive residual stress (-100 MPa) in the circumferential direction is applied to an inner surface 40c of the analytic model 40.

In the initial state, it is assumed that no stress occurs in a region between a position P that is away from the inner surface 40c in a radial direction of the analytic model 40 (a position indicated with an arc-shaped broken line) and an outer surface 40d. Further, in the initial state, a stress distribution in a region between the inner surface 40c and the position P is set as a linear distribution such that a compressive stress is gradually decreased from the inner surface 40c toward the position P. Figure 2(b) as well as Figure 3 and Figure 4 described later each illustrate a stress state at the end portion 40b. Hereinafter, a distance in the radial direction between the inner surface 40c and a point P1 at which the compressive stress is zero at the end portion 40b is denoted by a distance t, and a thickness of the analytic model 40 is denoted by a thickness T. Note that if there is a plurality of points at which the compressive stress is zero at the end portion 40b, one of the points closest to the inner surface 40c is taken as P1.

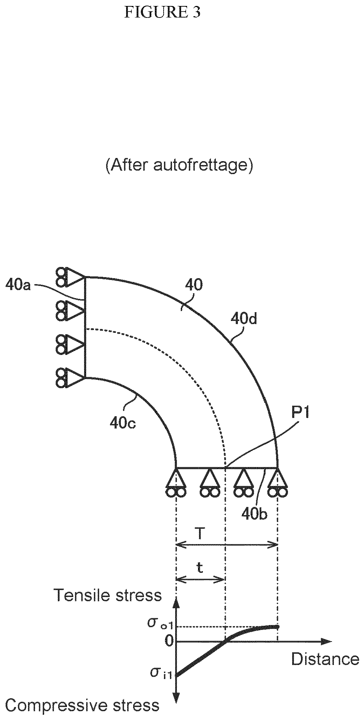

After the volume force is provided as described above, an elastic analysis is conducted to redistribute the stress. This causes a change in the stress state in the analytic model 40 as illustrated in Figure 3, for example. Note that, in Figure 3, a position where the stress is zero is indicated with a broken line. In a region inward of the broken line, a compressive stress in a circumferential direction occurs, and in a region outward of the broken line, a tensile stress in the circumferential direction occurs. In the condition illustrated in Figure 3, an integrated value of the stress distribution of the entire analytic model 40 is zero. The stress state illustrated in Figure 3 corresponds to a stress state of the steel pipe 20 after the autofrettage. In the condition illustrated in Figure 3, a stress at an intersection of the inner surface 40c and the end portion 40b is obtained as the residual stress $\sigma_{i1}$ at an inner surface 20b of the steel pipe 20 after the autofrettage, and a stress at an intersection of the outer surface 40d and the end portion 40b is obtained as the residual stress $\sigma_{o1}$ at the outer surface 20a of the steel pipe 20 after the autofrettage.

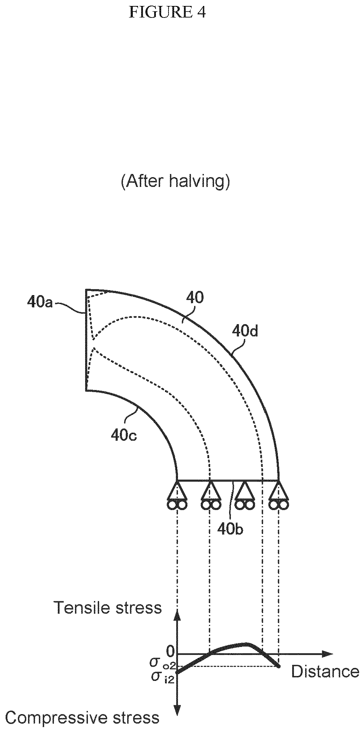

Next, to simulate the halved sample 22 (halved steel pipe 20), an elastic analysis is conducted with the constraint on the end portion 40a eliminated, as illustrated in Figure 4. This causes an additional change in the stress state in the analytic model 40. Note that, in Figure 4, a position where the stress is zero is indicated with a broken line. In an example illustrated in Figure 4, in the analytic model 40, a tensile stress in the circumferential direction occurs at its center portion in the radial direction, and compressive stresses in the circumferential direction occur at its arc-shaped region along the inner surface 40c and its arc-shaped region along the outer surface 40d.

In the analytic model 40 illustrated in Figure 4, the end portion 40a corresponds to the cut surface 22c of the halved sample 22 (see Figure 1), and the end portion 40b corresponds to a center portion 22d in the circumferential direction of the halved sample 22 (see Figure 1). In the condition illustrated in Figure 4, a stress at the intersection of the inner surface 40c and the end portion 40b is obtained as the residual stress $\sigma_{i2}$ at the inner surface 22b of the halved sample 22, and a stress at the intersection of the outer surface 40d and the end portion 40b is obtained as the residual stress $\sigma_{o2}$ at the outer surface 22a of the halved sample 22.

The analysis described with reference to Figure 2(b), Figure 3, and Figure 4 is conducted on steel pipes 20 each having given dimensions while the distance t at the initial state is varied (i.e., while the position of the point P1 at which the compressive stress is zero in Figure 2(b) is varied).

As a result of various investigations conducted by the present inventors, it has been found that the thickness T of the steel pipe 20 as well as the distance t in the steel pipe 20 after the autofrettage (see Figure 3), the residual stress $\sigma_{o1}$ at the outer surface 20a of the steel pipe 20 (see Figure 3), the residual stress $\sigma_{i1}$ at the inner surface 20b of the steel pipe 20 (see Figure 3), the residual stress $\sigma_{o2}$ at the outer surface 22a of the halved sample 22 (see Figure 4), and the residual stress $\sigma_{i2}$ at the inner surface 22b of the halved sample 22 (see Figure 4), which are determined as described above, have a certain relation.

Specifically, the present inventors found that there is a certain correlation between a value of $(t/T)^2$ and a value of $(\sigma_{i2}/-\sigma_{i1})$ in the steel pipe 20 after the autofrettage. The present inventors made a linear approximation of the relation between the value of $(t/T)^2$ and the value of $(\sigma_{i2}/-\sigma_{i1})$ by least squares method, deriving Formula (1) shown below. Note that, in Formula (1) below, A and B are coefficients.

$$\sigma_{i2}/(-\sigma_{i1}) = A \times (t/T)^2 - B \qquad (1)$$

Rearrangement of Formula (1) above for $\sigma_{i1}$ gives Formula (i) shown below. Note that, in the present invention, A is set to a value given by Formula (iii) shown below, and B is set to one.

$$\sigma_{i1} = (-\sigma_{i2}) / (A \times (t/T)^2 - 1) \qquad (i)$$

$$A = 3.9829 \times \exp(0.1071 \times (D/d)^2) \qquad (iii)$$

Further, the present inventors found that there is also a certain correlation between the value of $(t/T)^2$ and a value of $((\sigma_{o2}-\sigma_{o1}) / (-\sigma_{i1}))$ in the steel pipe 20 after the autofrettage. The present inventors made a linear approximation of the relation between the value of $(t/T)^2$ and the value of $((\sigma_{o2}-\sigma_{o1}) / (-\sigma_{i1}))$ by least squares method, deriving Formula (2) shown below. Note that, in Formula (2) below, C and E are coefficients.

$$(\sigma_{o2}-\sigma_{o1}) / (-\sigma_{i1})= -C \times (t/T)^2 - E \qquad (2)$$

From Formula (1) and Formula (2) above, $(t/T)$ can be given by Formula (3) shown below.

$$t/T = ((B\times(\sigma_{o2}-\sigma_{o1}) - E\times\sigma_{i2}) / (A\times(\sigma_{o2}-\sigma_{o1}) - C\times\sigma_{i2}))^{1/2} \qquad (3)$$

Further, in the present invention, B is set to one, and E is set to zero, which gives Formula (ii) shown below. C is set to a value given by Formula (iv) shown below.

$$t/T = ((\sigma_{o2}-\sigma_{o1}) / (A\times(\sigma_{o2}-\sigma_{o1}) - C\times\sigma_{i2}))^{1/2} \qquad (ii)$$

$$C = -3.3966 \times \exp(0.0452\times(D/d)^2) \qquad (iv)$$

From Formula (i) to Formula (iv) obtained based on the estimation model, an estimated value $\sigma_{i1}$ of the residual stress at the inner surface 20b of the steel pipe 20 after the autofrettage can be calculated.

In addition, the steel pipe according to the present invention makes a value of $\sigma_{i1}$ satisfy Formula (v) shown below:

$$1.1 \times F \times \sigma_y \leq \sigma_{i1} \leq 0.8 \times F \times \sigma_y \qquad (v)$$

where F in Formula (v) is a coefficient,

F = $(0.3 \times (3-D/d)^2 - 1)$ when $1.2 \leq D/d \leq 3.0$, and
F = -1 when $D/d > 3.0$.

By bringing $\sigma_{i1}$ to not more than $0.8 \times F \times \sigma_y$ in the relation with the yield stress of the steel pipe through the autofrettage, high critical internal pressure can be provided. If $\sigma_{i1}$ falls below $1.1 \times F \times \sigma_y$, a tensile residual stress on an outer surface side becomes high, which not only makes a rise in the critical internal pressure saturate but also rather decreases the critical internal pressure.

3. Production Method

There are no special limitations on a method for producing the steel pipe for pressure piping according to the present invention; however, the steel pipe for pressure piping can be produced by performing steps including performing autofrettage under various conditions on a plurality of steel pipe starting materials that bring D/d to 1.2 or more, and determining $\sigma_{i1}$ of each of the resultant steel pipes by the method described above and selecting steel pipes that make $\sigma_{i1}$ satisfy Formula (v).

Note that the autofrettage conditions can be adjusted such that $\sigma_{i1}$ satisfies Formula (v), by controlling an autofrettage pressure and/or an autofrettage duration, for example. As described above, by estimating a residual stress at an inner surface of a steel pipe after autofrettage and before halving accurately, autofrettage conditions can be optimized, and steel pipes having high critical internal pressure can be provided stably.

Further, for example, by forming connection heads at both end portions of the steel pipe, the steel pipe can be made into a high-pressure fuel injection pipe.

The present invention will be described below more specifically with reference to Examples, but the present invention is not limited to these Examples.

EXAMPLE

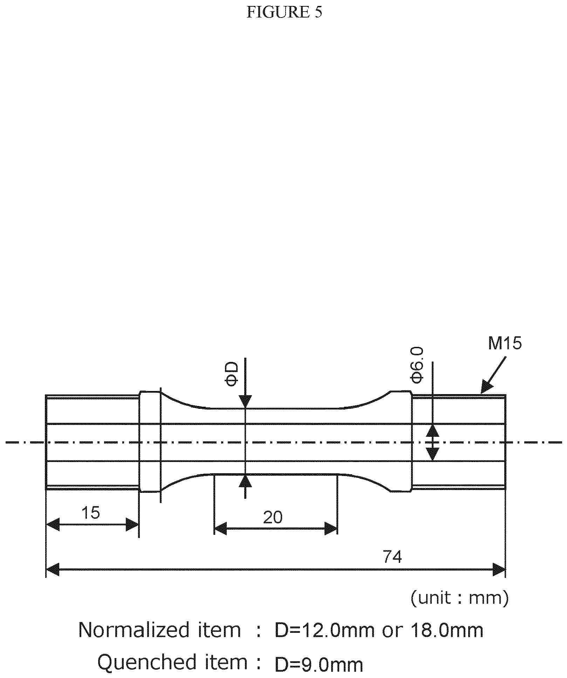

A steel having a chemical composition shown in Table 1 was melted in a vacuum furnace, by which an ingot was obtained. The ingot was heated to 1250°C and then subjected to hot forging, by which round bars each having a diameter of 20 mm were obtained. Further, the round bars were subjected to solution treatment in which the round bars were heated to 1000°C, retained for 10 minutes, and then allowed to cool, by which the round bars were made into starting materials for test specimens. The starting materials were subjected to rough machining, heat treatment, and finishing, by which internal pressure fatigue test specimens each having a shape illustrated in Figure 5 were obtained. Here, a shape after the rough machining was made such that the shape had an outer diameter that was 1 mm larger than that of the shape after the finishing illustrated in Figure 5 and had an inner diameter that was 1 mm smaller than that of the shape after the finishing. Note that the unit of lengths illustrated in Figure 5 is mm.

[Table 1]

Table 1

| Chemical composition (in mass%, balance: Fe and impurities) | | | | | | | | | | | | | | |
|---|---|---|---|---|---|---|---|---|---|---|---|---|---|---|
| C | Si | Mn | P | S | Cu | Cr | Ni | Mo | Ti | V | Nb | Sol.Al | N | O |
| 0.20 | 0.30 | 1.36 | 0.017 | 0.0030 | <0.01 | 0.01 | <0.01 | 0.17 | 0.0070 | 0.057 | 0.027 | 0.027 | 0.0041 | 0.001 |

There were two types of heat treatment conditions: normalizing treatment in which the starting material is heated to 1000°C, retained for 10 minutes, and then air-cooled; and quenching and tempering treatment in which the starting material is heated to 1000°C by high-frequency heating, rapidly cooled, heated to 640°C, retained for 15 minutes, and then allowed to cool. Here, the former will be referred to as a normalized item, and the latter will be referred to as a quenched item. In the shape of the test specimen illustrated in Figure 5, an outer diameter of the normalized item was 12.0 mm or 18.0 mm, and an outer diameter of the quenched item was 9.0 mm. In other words, a ratio D/d of the outer diameter D to the inner diameter d of the normalized item was 2.0 or 3.0, and the ratio D/d of the quenched item was 1.5. Further, their inner surfaces were polished to have a surface roughness Ra (arithmetic average roughness) of 0.2 μm or less.

From one of the internal pressure fatigue test specimens, a small test specimen having a thin dumbbell shape described in Non-Patent Document 1 was cut out and subjected to a tensile test to evaluate mechanical properties. Results of the evaluation are shown in Table 2. It is understood that quenched items had higher tensile strengths, higher yield stresses, and higher yield ratios than those of normalized items.

[Table 2]

Table 2

| Test No. | Classification | Old | Tensile strength (MPa) | Yield stress (MPa) | Yield ratio | Autofrettage pressure (MPa) | Measured value of residual stress (MPa) | | | Estimated value of residual stress (MPa) | Left side value of formula (v)[†] | Right side value of formula (v)[†] | Critical internal pressure (MPa) | Right side value of formula (I)[‡] | |
|---|---|---|---|---|---|---|---|---|---|---|---|---|---|---|---|
| | | | | | | | $\sigma_{o1}$ | $\sigma_{o2}$ | $\sigma_{i2}$ | $\sigma_{i1}$ | | | | | |
| 1 | Normalized item | 2.0 | 722 | 545 | 0.75 | 340 | 40 | -47 | -123 | -254 | -420 | -305 | 300 | 307 | Comparative example |
| 2 | Normalized item | 2.0 | 722 | 545 | 0.75 | 380 | 117 | -64 | -72 | -344 | -420 | -305 | 340 | 307 | Inventive example |
| 3 | Normalized item | 2.0 | 722 | 545 | 0.75 | 420 | 181 | -32 | -51 | -371 | -420 | -305 | 360 | 307 | Inventive example |
| 4 | Quenched item | 1.5 | 948 | 873 | 0.92 | 280 | 13 | -17 | -73 | -113 | -312 | -227 | 260 | 299 | Comparative example |
| 5 | Quenched item | 1.5 | 948 | 873 | 0.92 | 350 | 153 | -16 | -34 | -262 | -312 | -227 | 300 | 299 | Inventive example |
| 6 | Normalized item | 3.0 | 722 | 545 | 0.75 | 425 | 25 | -28 | -228 | -336 | -600 | -436 | 350 | 364 | Comparative example |
| 7 | Normalized item | 3.0 | 722 | 545 | 0.75 | 490 | 36 | -55 | -259 | -446 | -600 | -436 | ≥400 | 364 | Inventive example |

[†] $1.1 \times F \times \sigma_y \leq \sigma_{i1} \leq 0.8 \times F \times \sigma_y$ ...(v)
[‡] $IP \geq 0.44 \times TS \times \alpha$ ...(I)

Subsequently, the resultant internal pressure fatigue test specimens were subjected to autofrettage. The autofrettage was performed in such a manner as to seal one end face of the internal pressure fatigue test specimen illustrated in Figure 5, fill an inside of the test specimen with hydraulic fluid as a pressure medium from the other end face, and control an internal pressure fatigue test specimen in a filled portion. The autofrettage is performed in such a manner as to increase the internal pressure in the filled portion to an autofrettage pressure $P_{af}$ and unload the internal pressure. Three levels of the autofrettage pressure were specified for the normalized items, and two levels of the autofrettage pressure were specified for the quenched items, and a plurality of test specimens were processed for each level of the autofrettage pressure.

One of the test specimens after the autofrettage was subjected to a residual stress measurement. First, an outer layer of an outer surface of the test specimen at a center position in a longitudinal direction was removed within the range of 10 $\mu$m or less by electropolishing, and then a circumferential residual stress $\sigma_{o1}$ was measured. As a method for the measurement, the $\sin^2\psi$ method based on an X-ray diffraction technique was used, and the method was performed in conformity with Non-Patent Document 2. Detailed measurement conditions are as follows.

- Scanning method: Side inclination method, constant $\eta$ method (PSPC method)
- X-ray stress measurement apparatus: PSPC-RSF from Rigaku Corporation
- Characteristic X-ray: Cr k$\alpha$
- Diffraction plane for measurement: $\alpha$-Fe211
- Entrance slit: Single collimator with a diameter of 0.3 mm
- Incident angles ($\psi$): 0°, 12.9°, 18.5°, 22.8°, 26.6°, 30.0°, 33.3°, 36.3°, and 39.3°
- Incident angle ($\psi$): $\psi_P$ axis swing $\pm$3°
- Diffraction angle determination method: Half-value width method
- Stress constant (K): -318 MPa/°

Note that all conditions for a residual stress measurement described below were as described above.

Next, the test specimen which was measured for the residual stress at its outer surface was cut in half in its pipe axis direction by wire cut electrical discharge. When a position of the residual stress measurement at the outer surface was determined to be 0° in a circumferential direction, a position of the cutting was set to a vicinity of $\pm$ 90°. A thickness t between a cut surface and an outer surface at a center position in a longitudinal direction of each of the samples after the halving was set within the range of D/2 $\pm$0.2 mm.

Then, on each of the samples after the halving, the circumferential residual stress $\sigma_{o2}$ was measured again at the position of the residual stress measurement at the outer surface. Further, after the halving, an outer layer of an inner surface of each test specimen at the center position in the longitudinal direction was removed within the range of 10 $\mu$m or less by electropolishing, and then a circumferential residual stress $\sigma_{i2}$ at an inner surface of the steel pipe at its center position was measured.

The residual stress measured values $\sigma_{o1}$, $\sigma_{o2}$, and $\sigma_{i2}$ obtained in such a manner are shown in Table 2. These measured values are substituted into Formulas (i) to (iv), which gives the estimated value $\sigma_{i1}$ of the residual stress at the inner surface after the autofrettage and before the halving. The estimated value failed to satisfy Formula (v) in comparative examples and satisfied Formula (v) in inventive examples of the present invention. As shown in Table 2, it is estimated that the inventive examples of the present inventions caused higher compressive residual stresses than those caused by the comparative examples.

Further, the other test specimens were subjected to an internal pressure fatigue test to determine their critical internal pressures. The internal pressure fatigue test is performed in such a manner as to cause an internal pressure to fluctuate within the range of 18 MPa at the minimum from a maximum internal pressure such that the internal pressure follows a sine wave over time. The frequency of the internal pressure fluctuations was set to 8 Hz. A maximum internal pressure that caused no breakage (leak) to occur even when the number of repetitions reaches $10^7$ as the result of the internal pressure fatigue test was evaluated as the critical internal pressure.

Results of the evaluation are shown together in Table 2. Note that an indication of "$\geq$ 400" in the column of Critical Internal Pressure in Table 2 means that no breakage occurred even at an upper limit internal pressure (400 MPa), up to which a testing machine used for the internal pressure fatigue test was capable of applying a load.

As is clear from the results shown in Table 2, the inventive examples of the present invention provided higher critical internal pressures than those provided by the comparative examples. Since the normalized items each have high D/d and a low yield ratio, the normalized items are likely to cause high compressive residual stress at their inner surfaces and generally have higher critical internal pressures than those of the quenched items. Therefore, the normalized items enhanced an advantageous effect of improving the critical internal pressure of the inventive examples of the present invention compared with the comparative examples. Although the quenched items had high tensile strength, since the quenched items each have low D/d and a high yield ratio, the quenched items are unlikely to cause compressive residual stress at their inner surfaces. However, even under such conditions, improvement in the critical internal pressure was recognized in the inventive examples of the present invention compared with the comparative examples.

INDUSTRIAL APPLICABILITY

According to the present invention, steel pipes for pressure piping having a high critical internal pressure can be provided stably. The steel pipe for pressure piping according to the present invention is therefore suitably applicable particularly to a hydraulic cylinder or a fuel injection pipe for an automobile.

REFERENCE SIGNS LIST

| | |
|---|---|
| 20 | steel pipe |
| 20a | outer surface |
| 20b | inner surface |
| 22 | halved sample |
| 22a | outer surface |
| 22b | inner surface |
| 22c | cut surface |
| 22d | center portion |
| 40 | analytic model |
| 40a, 40b | end portion |
| 40c | inner surface |
| 40d | outer surface |

**Claims**

1.  A steel pipe for pressure piping, the steel pipe being subjected to autofrettage, wherein

    when an outer diameter of the steel pipe is denoted by D (mm), an inner diameter of the steel pipe is denoted by d (mm), and a yield stress of the steel pipe is denoted by $\sigma_y$ (MPa), and
    when a measured value of a residual stress at an outer surface of the steel pipe after the autofrettage is denoted by $\sigma_{o1}$ (MPa), a measured value of a residual stress at an outer surface of the steel pipe after the autofrettage and halving is denoted by $\sigma_{o2}$ (MPa), and a measured value of a residual stress at an inner surface of the steel pipe after the autofrettage and the halving is denoted by $\sigma_{i2}$ (MPa),
    D/d is 1.2 or more, and
    an estimated value $\sigma_{i1}$ (MPa) of a residual stress at an inner surface of the steel pipe after the autofrettage satisfies Formula (v) shown below, the estimated value $\sigma_{i1}$ being determined by Formula (i) to Formula (iv) shown below:

    $$\sigma_{i1} = (-\sigma_{i2}) / (A \times (t/T)^2 - 1) \qquad (i)$$

    $$t/T = ((\sigma_{o2} - \sigma_{o1}) / (A \times (\sigma_{o2} - \sigma_{o1}) - C \times \sigma_{i2}))^{1/2} \qquad (ii)$$

    $$A = 3.9829 \times \exp(0.1071 \times (D/d)^2) \qquad (iii)$$

    $$C = -3.3966 \times \exp(0.0452 \times (D/d)^2) \qquad (iv)$$

    $$1.1 \times F \times \sigma_y \leq \sigma_{i1} \leq 0.8 \times F \times \sigma_y \qquad (v)$$

    where F in Formula (v) is a coefficient,

F = (0.3 × (3-D/d)$^2$ - 1) when 1.2 ≤ D/d ≤ 3.0, and
F = -1 when D/d > 3.0.

FIGURE 1

(a)

(b)

(c)

(d)

FIGURE 2

(a)

(b)

FIGURE 3

(After autofrettage)

FIGURE 4

(After halving)

FIGURE 5

(unit : mm)

Normalized item : D=12.0mm or 18.0mm

Quenched item : D=9.0mm

**INTERNATIONAL SEARCH REPORT**

| International application No. |
| --- |
| PCT/JP2021/014435 |

**A.    CLASSIFICATION OF SUBJECT MATTER**
Int. Cl. F16L9/02(2006.01)i, C22C38/00(2006.01)i, C22C38/50(2006.01)i,
F02M55/02(2006.01)i
FI: F16L9/02, C22C38/00 301Z, C22C38/50, F02M55/02 320P, F02M55/02 320Z
According to International Patent Classification (IPC) or to both national classification and IPC

**B.    FIELDS SEARCHED**

Minimum documentation searched (classification system followed by classification symbols)
Int. Cl. F16L9/02, C22C38/00, C22C38/50, F02M55/02

Documentation searched other than minimum documentation to the extent that such documents are included in the fields searched
```
Published examined utility model applications of Japan     1922-1996
Published unexamined utility model applications of Japan   1971-2021
Registered utility model specifications of Japan           1996-2021
Published registered utility model applications of Japan   1994-2021
```

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2004-92551 A (USUI KOKUSAI SANGYO KAISHA, LTD.) 25 March 2004, paragraphs [0001]-[0022], fig. 1-6 | 1 |
| A | WO 2016/203924 A1 (USUI KOKUSAI SANGYO KAISHA, LTD.) 22 December 2016, entire text, all drawings | 1 |
| A | JP 2005-201254 A (USUI KOKUSAI SANGYO KAISHA, LTD.) 28 July 2005, entire text, all drawings | 1 |
| P, A | JP 2020-128915 A (NIPPON STEEL CORP.) 27 August 2020, entire text, all drawings | 1 |

☐   Further documents are listed in the continuation of Box C.        ☒   See patent family annex.

| | |
| --- | --- |
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br>17.05.2021 | Date of mailing of the international search report<br>25.05.2021 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application No.

PCT/JP2021/014435

| Patent Documents referred to in the Report | Publication Date | Patent Family | Publication Date |
|---|---|---|---|
| JP 2004-92551 A | 25.03.2004 | US 2004/0080156 A1<br>paragraphs [0001]-[0044], fig. 1-6<br>US 2006/0260124 A1<br>DE 10340070 A1<br>FR 2844011 A1<br>KR 10-2004-0020843 A<br>CN 1490515 A | |
| WO 2016/203924 A1 | 22.12.2016 | US 2018/0171426 A1<br>entire text, all drawings<br>EP 3312298 A1<br>CN 107735506 A<br>KR 10-2018-0018742 A | |
| JP 2005-201254 A | 28.07.2005 | US 2005/0127665 A1<br>entire text, all drawings<br>DE 102004061175 A1<br>FR 2863668 A1<br>KR 10-2005-0061374 A<br>CN 1637273 A | |
| JP 2020-128915 A | 27.08.2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9057329 A
- WO 2007119734 A
- WO 2009008281 A
- WO 2015129617 A
- WO 2016203924 A

**Non-patent literature cited in the description**

- **EISUKE NAKAYAMA ; MITSUO MIYAHARA ; KAZUO OKAMURA ; HIROKI FUJIMOTO ; KIYOYUKI FUKUI.** Prediction of Fatigue Strength of Spot-Welded Joints Based on Local Material Strength Properties Measured by Small Specimen. *J.Soc, Mat. Sci., Japan,* October 2004, vol. 53 (10), 1136-1142
- Standard for X-Ray Stress Measurement (2002) - Iron and Steel. *The Society of Materials Science, Japan,* March 2002